# EUROPEAN PATENT APPLICATION

(11) **EP 4 703 436 A1**
(43) Date of publication of application: **04.03.2026**
(21) Application number: 24197563.0
(22) Date of filing: 30.08.2024
(51) Int. Cl.: C09D 5/20, C09D 7/61, C09D 133/04, C09D 175/04

(54) **LIQUID RESIN COMPOSITION**

(71) Applicant: Swanson Technologies Corporation, Taipei City 114 (TW)
(72) Inventor: Wu, Tung-Yang, 114 Taipei City (TW); CHAN, Huang-Yi, 114 Taipei City (TW); LIU, I-Tseng, 114 Taipei City (TW); FANG, Kuan-Chieh, 114 Taipei City (TW); Liao, Jung-Chen, 114 Taipei City (TW); LIU, Yi-Ju, 114 Taipei City (TW)
(74) Representative: 2K Patentanwälte Blasberg Kewitz & Reichel

(57) **Abstract**

The present invention provides a liquid resin composition that comprises: (a) a resin making up 20-80 wt% of the liquid resin composition, wherein the resin is selected from the group consisting of a self-crosslinking acrylic resin and a polyurethane resin, and the glass transition temperature (Tg) of the resin is in the range from -20°C to 25°C; (b) thermal shielding particles making up 1-10 wt% of the liquid resin composition; and (c) a water-based solvent making up 5-25 wt% of the liquid resin composition. The film is formed by coating the substrate with the liquid resin composition and drying the liquid resin composition on the substrate. A film formed of the liquid resin composition of the present invention can block out IR and UV radiation while remaining highly permeable to visible light, meaning the film can ward off the radiant heat and UV radiation of sunlight but is still visually transparent. Thus, the invention contributes to lowering the temperature of an indoor environment naturally, saving energy, reducing carbon emissions, extending the service lives of objects, and providing surface protection. Besides, the film of the invention is easy to apply and peel off, does not leave adhesive residue on the surface of the object coated with the film, and can clean the surface of the object incidentally by being peeled off the surface.

## Description

### BACKGROUND OF THE INVENTION

### 1. Technical Field

The present invention relates to a liquid resin composition that can form a film that is easy to peel off. More particularly, the invention relates to, but is not limited to, a liquid thermal insulation film.

### 2. Description of Related Art

Many buildings nowadays use glass doors and windows, which not only are visually pleasant, but also allow sunlight to enter, and thus light up, an indoor environment. Excessive exposure to light, however, will accelerate the aging, and thereby shorten the service lives, of the objects in a building such as furniture, decorative objects, and carpets. The same is true for cars, which have glass windows. Moreover, sunlight projected into a car may dazzle the driver, and car windows may explode if the temperature in the car gets too high.

Therefore, the windows of buildings and of means of transport are generally adhesively attached with a thermal insulation film to block out heat, ultraviolet (UV) radiation, and so on. A typical thermal insulation film is a metal film made of a metal compound and can effectively insulate thermal energy and resist infrared (IR) or UV radiation. When such a metallic film has been used for a while, however, its thermal insulation function tends to deteriorate as a result of oxidation or corrosion. In addition, the replacement of a thermal insulation film may cause damage to the surface of the object to which the film is adhesively attached, should the film be so difficult to peel off that adhesive residue is left on the surface.

### BRIEF SUMMARY OF THE INVENTION

In view of the shortcomings of the prior art, the present invention provides a liquid resin composition with which the surface of an object can be coated in order for the liquid resin composition to form a film when dried and to thereby make up various multilayer structures. The film not only can block out IR and UV radiation effectively while staying highly permeable to visible light, but also is highly resilient and can be peeled off with ease. Furthermore, the film of the invention will not leave adhesive residue on the surface of an object; rather, the surface of the object can be incidentally cleaned by peeling off the film.

Accordingly, one aspect of the present invention provides a liquid resin composition, comprising: (a) a resin making up 20-80 wt% of the liquid resin composition, wherein the resin is selected from the group consisting of a self-crosslinking acrylic resin and a polyurethane resin, and the resin has a glass transition temperature (Tg) in a range from -20°C to 25°C; (b) thermal shielding particles making up 1-10 wt% of the liquid resin composition; and (c) a water-based solvent making up 5-25 wt% of the liquid resin composition.

In one embodiment of the present invention, the thermal shielding particles are cesium tungsten oxide.

In one embodiment of the present invention, the water-based solvent is selected from the group consisting of water, a short-chain ester, an ether, and an alcohol.

In one embodiment of the present invention, the liquid resin composition further comprises an additive, wherein the additive is selected from the group consisting of an ultraviolet (UV) absorber, a UV stabilizer, a thickener, a leveling agent, a rheology modifier, and an anti-foaming agent.

In one embodiment of the present invention, the additive is the UV absorber or the UV stabilizer and makes up 1-3 wt% of the liquid resin composition.

In one embodiment of the present invention, the additive is the leveling agent and makes up 0.01-7 wt% of the liquid resin composition.

In one embodiment of the present invention, the additive is the rheology modifier and makes up 0.1-5 wt% of the liquid resin composition.

In one embodiment of the present invention, the additive is the anti-foaming agent and makes up 0.05-3 wt% of the liquid resin composition.

Another aspect of the present invention provides a film that can be peeled off a substrate, wherein the film is formed by coating the substrate with the foregoing liquid resin composition and drying the liquid resin composition on the substrate.

In one embodiment of the present invention, the substrate is glass, a polycarbonate, or an acrylic resin.

In one embodiment of the present invention, the film has a thickness in a range from 10 to 50 µm.

In one embodiment of the present invention, the film has a visible light transmission (VLT) rate in a range from 70% to 90%.

In one embodiment of the present invention, the film has an infrared (IR) rejection rate in a range from 60% to 99%.

In one embodiment of the present invention, the film has an ultraviolet (UV) rejection rate in a range from 45% to 95%.

In one embodiment of the present invention, the film has a solar heat gain coefficient (SHGC) in a range from 0.4 to 0.67.

Another aspect of the present invention provides a multilayer structure, comprising the foregoing film, wherein the multilayer structure is a wall material, a roofing material, or a window of a building or structure or a window of a vehicle.

A film formed of the liquid resin composition of the present invention can block out IR and UV radiation while remaining highly permeable to visible light, meaning the film can ward off the radiant heat and UV radiation of sunlight but is still visually transparent. Thus, the invention contributes to lowering the temperature of an indoor environment naturally, saving energy, reducing carbon emissions, extending the service lives of objects, and providing surface protection. Besides, the film of the invention is easy to apply and peel off, does not leave adhesive residue on the surface of the object coated with the film, and can clean the surface of the object incidentally by being peeled off the surface.

### BRIEF DESCRIPTION OF THE SEVERAL VIEWS OF THE DRAWINGS

The mode of implementing the techniques of the present invention is described below with reference to the accompanying drawings by way of example only, in which drawings:
FIG. 1 shows photos of a film formed of the liquid resin composition according to an embodiment of the invention;
FIG. 2 schematically shows a continuous sunlight irradiation device used to test an embodiment of the invention;
FIG. 3 is a plot showing the ability of the film according to an embodiment of the invention to reduce temperature under continuous sunlight irradiation; and
FIG. 4A to FIG. 4C are plots showing the temperature-reducing abilities of the films according to an embodiment of the invention, wherein the films are different in thickness.

It is understood that the various aspects of the present invention are not limited to the configurations, means, or features shown in the drawings.

### DETAILED DESCRIPTION OF THE INVENTION

As is conventional, the various features and elements in the drawings are not necessarily drawn to scale; the drawings are provided to show the features and elements related to the present invention in an ideal manner. In addition, identical or similar reference numerals in the drawings refer to similar elements or parts.

The embodiments described below are not intended to impose excessive limitations on the present inventions. A person of ordinary skill in the art may modify or change the embodiments discussed herein without departing from the spirit or scope of the invention, and all such modifications and changes shall be viewed as falling within the scope of the invention.

As used herein, terms such as "comprise," "include," "have," and "contain" are inclusive or open-ended unless otherwise stated and therefore do not exclude elements or steps that are not specified. The terms "a" and "said" may be construed as referring to a single referent or plural referents. The term "one or a plurality of" means "at least one" and therefore may be used to identify a single feature or a mixture/combination of features. Moreover, unless otherwise stated, the term "provided on an article" as used in this specification and the appended claims may be construed as being directly or indirectly attached to a surface of the article or as contacting the surface of the article in other ways, wherein the definition of the surface should be determined according to the context and common knowledge in the art.

The present invention provides a liquid resin composition that includes: (a) a resin making up 20-80 wt% of the liquid resin composition, wherein the resin is selected from the group consisting of a self-crosslinking acrylic resin and a polyurethane resin, and the glass transition temperature (Tg) of the resin is in the range from -20°C to 25°C; (b) thermal shielding particles making up 1-10 wt% of the liquid resin composition; and (c) a water-based solvent making up 5-25 wt% of the liquid resin composition.

More specifically, the percentage by weight of the resin making up 20-80 wt% of the liquid resin composition may be in a range defined by, for example but not limited to, any two of the following values: 20 wt%, 25 wt%, 30 wt%, 35 wt%, 40 wt%, 45 wt%, 50 wt%, 55 wt%, 60 wt%, 65 wt%, 70 wt%, 75 wt%, and 80 wt%; and the -20°C to 25°C Tg of the resin may be in a range defined by, for example but not limited to, any two of the following values: -20°C, -19°C, -18°C, -17°C, -16°C, -15°C, -14°C, -13°C, -12°C, -11°C, -10°C, -9°C, -8°C, -7°C, -6°C, -5°C, -4°C, -3°C, -2°C, -1°C, 0°C, 1°C, 2°C, 3°C, 4°C, 5°C, 6°C, 7°C, 8°C, 9°C, 10°C, 11°C, 12°C, 13°C, 14°C, 15°C, 16°C, 17°C, 18°C, 19°C, 20°C, 21°C, 22°C, 23°C, 24°C, and 25°C.

More specifically, the percentage by weight of the thermal shielding particles making up 1-10 wt% of the liquid resin composition may be in a range defined by, for example but not limited to, any two of the following values: 1 wt%, 2 wt%, 3 wt%, 4 wt%, 5 wt%, 6 wt%, 7 wt%, 8 wt%, 9 wt%, and 10 wt%; and the percentage by weight of the water-based solvent making up 5-25 wt% of the liquid resin composition may be in a range defined by, for example but not limited to, any two of the following values: 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, and 25 wt%.

In one embodiment of the present invention, the resin may be selected from various polymeric resins including polyesters, acrylic resins, modified acrylic resins, epoxy resins, organic silicone resins, polyurethane resins, fluorine-containing resins, starch, cellulose, and copolymers or mixtures of at least two of the above. In a preferred embodiment, the resin is selected from the group consisting of a self-crosslinking acrylic resin and a polyurethane resin, and more preferably, the resin is a polyurethane resin in order to provide more desirable material compatibility, optical transparency, ability to be peeled off, and anti-fingerprint property.

In one embodiment of the present invention, the thermal shielding particles include titanium dioxide (TiO₂), mica, indium tin oxide (ITO), antimony tin oxide (ATO), tungsten trioxide, or cesium tungsten oxide. In a preferred embodiment, the thermal shielding particles are cesium tungsten oxide in order to provide more desirable IR blockage and permeability to visible light. In one embodiment of the invention, the thermal shielding particles have a particle size in the range from 10 to 50 nm, and the range may be defined by, for example but not limited to, any two of the following values: 10 nm, 13 nm, 15 nm, 18 nm, 20 nm, 22 nm, 24 nm, 25 nm, 27 nm, 30 nm, 31 nm, 34 nm, 35 nm, 36 nm, 39 nm, 40 nm, 42 nm, 43 nm, 45 nm, 46 nm, 47 nm, 48 nm, 49 nm, and 50 nm.

As used herein, the term "water-based solvent" refers to any solvent that has no activity toward the other ingredients in the present invention; that meets the requirements of environmental friendliness, safety, and non-toxicity; and that can be used in a well-ventilated indoor environment. In one embodiment of the invention, the water-based solvent is selected from the group consisting of water, a short-chain ester, an ether, and an alcohol, such as but not limited to an ester, an alcohol, ethylene glycol dimethyl ether, propylene glycol monomethyl ether (PGME), propylene glycol mono-tert-butyl ether, a ketone, or a mixture of at least two of the above. In some embodiments, the water includes deionized water and/or distilled water. In some embodiments, the solvent is PGME, methanol, ethanol, an ethylene glycol ether (e.g., diethyl ether, a tert-butyl ether, or a cyclic ether), a diol, a ketone (e.g., acetone), or a mixture of at least two of the above. In some embodiments, the water-based solvent barely contains a volatile organic solvent such as an aliphatic hydrocarbon, ethyl acetate, an ethylene glycol ether, or acetone (e.g., the concentration of such a volatile organic solvent being less than 1000 ppm, less than 100 ppm, less than 10 ppm, or less than 1 ppm).

In one embodiment of the present invention, the liquid resin composition further includes an additive, and the additive is selected from the group consisting of a UV absorber, a UV stabilizer, a thickener, a leveling agent, a rheology modifier, and an anti-foaming agent. Without being bound by any specific theory, a UV absorber or UV stabilizer can enhance the UV-blocking ability of a liquid window film, and without being bound by any specific theory, a thickener, a leveling agent, a rheology modifier, and an anti-foaming agent can enhance the stability of film formation by a coating process.

In one embodiment of the present invention, the additive includes a UV absorber or a UV stabilizer, and the UV absorber or the UV stabilizer makes up 1-3 wt% of the liquid resin composition. More specifically, the percentage by weight of the UV absorber or the UV stabilizer may be in a range defined by, for example but not limited to, any two of the following values: 1 wt%, 1.1 wt%, 1.2 wt%, 1.3 wt%, 1.5 wt%, 1.6 wt%, 1.7 wt%, 1.8 wt%, 1.9 wt%, 2 wt%, 2.1 wt%, 2.2 wt%, 2.3 wt%, 2.4wt% , 2.5 wt%, 2.6 wt%, 2.7 wt%, 2.8 wt%, 2.9 wt%, and 3 wt%.

In one embodiment of the present invention, the additive includes a leveling agent, and the leveling agent makes up 0.01-7 wt% of the liquid resin composition. More specifically, the percentage by weight of the leveling agent may be in a range defined by, for example but not limited to, any two of the following values: 0.01 wt%, 0.05 wt%, 0.1 wt%, 0.3 wt%, 0.5 wt%, 0.7 wt%, 0.9 wt%, 1 wt%, 1.3 wt%, 1.5 wt%, 1.7 wt%, 1.9 wt%, 2 wt%, 2.1 wt%, 2.3 wt%, 2.5 wt%, 2.5 wt%, 2.7 wt%, 3 wt%, 3.1 wt%, 3.3 wt%, 3.5 wt%, 3.7 wt%, 3.9 wt%, 4.1 wt%, 4.3 wt%, 4.5 wt%, 4.7 wt%, 4.9 wt%, 5.1 wt%, 5.3 wt%, 5.5 wt%, 5.7 wt%, 5.9 wt%, 6 wt%, 6.1 wt%, 6.3 wt%, 6.5 wt%, 6.7 wt%, 6.9 wt%, and 7 wt%. In a preferred embodiment of the invention, the leveling agent makes up 0.05-6.5 wt% of the liquid resin composition.

As used herein, the term "rheology modifier" refers to a compound or composition that is added to regulate the rheology of a formula. For example, a rheology modifier may cause a fast but controlled increase in viscosity after it is used, thereby improving the sag resistance of a coating; or, a rheology modifier may help prevent the solids in a pigment or a similar preparation from precipitation, thereby improving the transportability and storage of a coating material. In some embodiments, the rheology modifier may be inorganic, such as clay, fumed silica, or special clay (e.g., sepiolite, attapulgite, or smectite). In some embodiments, the rheology modifier may be organic, such as a cellulose material or a synthetic material (e.g., a hydrophobic modified polyurethane, a hydrophobic modified polyether, an alkali-swellable emulsion, or a castor oil-based thixotropic agent). In one embodiment of the present invention, the additive includes a rheology modifier, and the rheology modifier makes up 0.1-5 wt% of the liquid resin composition. More specifically, the percentage by weight of the rheology modifier may be in a range defined by, for example but not limited to, any two of the following values: 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.1 wt%, 1.2 wt%, 1.3 wt%, 1.5 wt%, 1.6 wt%, 1.7 wt%, 1.8 wt%, 1.9 wt%, 2 wt%, 2.1 wt%, 2.2 wt%, 2.3 wt%, 2.4wt% , 2.5 wt%, 2.6 wt%, 2.7 wt%, 2.8 wt%, 2.9 wt%, 3 wt%, 3.1 wt%, 3.2 wt%, 3.3 wt%, 3.4 wt%, 3.5 wt%, 3.6 wt%, 3.7 wt%, 3.8 wt%, 3.9 wt%, 4 wt%, 4.1 wt%, 4.2 wt%, 4.3 wt%, 4.4 wt%, 4.5 wt%, 4.6 wt%, 4.7 wt%, 4.8 wt%, 4.9 wt%, and 5 wt%. In a preferred embodiment of the invention, the rheology modifier makes up 0.2-4.5 wt% of the liquid resin composition.

As used herein, the term "anti-foaming agent" refers to a chemical additive for reducing or impeding the formation of foam. Such an additive may include one or more compound formulae. In one embodiment of the present invention, the additive includes an anti-foaming agent, and the anti-foaming agent makes up 0.05-3 wt% of the liquid resin composition. More specifically, the percentage by weight of the anti-foaming agent may be in a range defined by, for example but not limited to, any two of the following values: 0.05 wt%, 0.06 wt%, 0.07 wt%, 0.08 wt%, 0.09 wt%, 1 wt%, 1.1 wt%, 1.2 wt%, 1.3 wt%, 1.5 wt%, 1.6 wt%, 1.7 wt%, 1.8 wt%, 1.9 wt%, 2 wt%, 2.1 wt%, 2.2 wt%, 2.3 wt%, 2.4wt% , 2.5 wt%, 2.6 wt%, 2.7 wt%, 2.8 wt%, 2.9 wt%, and 3 wt%. In a preferred embodiment of the invention, the anti-foaming agent makes up 1-1.5 wt% of the liquid resin composition.

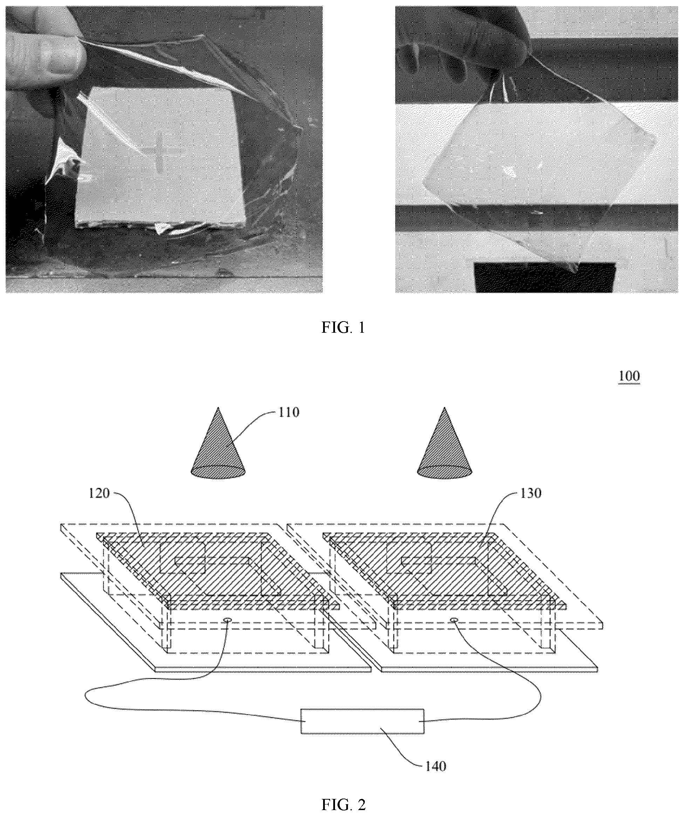

Another aspect of the present invention provides a film that can be peeled off a substrate, wherein the film is formed by coating the substrate with the foregoing liquid resin composition and drying the liquid resin composition on the substrate. A product of such a film is shown in FIG. 1. In one embodiment of the invention, the coating method is, for example, roller coating, brush coating, or spray coating. In a preferred embodiment, the coating method is spray coating in order to produce a film surface that is even and smooth. In a preferred embodiment, the film of the invention is formed by allowing the liquid resin composition on the substrate to dry naturally in a room-temperature environment.

In one embodiment of the present invention, the substrate may be glass, a polycarbonate (PC), polyethylene terephthalate (PET), polyethylene naphthalate (PEN), polyvinyl chloride (PVC), polypropylene (PP), polyethylene (PE), nylon, or an acrylic resin. In a preferred embodiment, the substrate is glass, a polycarbonate, or an acrylic resin.

In one embodiment of the present invention, the thickness of the film is in the range from 10 to 50 µm. More specifically, the thickness of the film may be in a range defined by, for example but not limited to, any two of the following values: 10 µm, 12 µm, 14 µm, 15 µm, 18 µm, 20 µm, 23 µm, 25 µm, 27 µm, 29 µm, 30 µm, 31 µm, 33 µm, 35 µm, 38 µm, 40 µm, 43 µm, 45 µm, 46 µm, 48 µm, 49 µm, and 50 µm. In some embodiments of the invention, the thickness of the film is measured with a digital dial gage, or more particularly with Digital Indicator 543-706B of Mitutoyo.

A film formed according to the present invention can block out IR and UV radiation while remaining highly permeable to visible light; in other words, the film can ward off the radiant heat and UV radiation of sunlight but is still visually transparent. In one embodiment of the invention, the film has a visible light transmission (VLT) rate in the range from 70% to 90%, and the VLT rate of the film may be in a range defined by, for example but not limited to, any two of the following values: 70%, 71%, 72%, 73%, 74%, 75%, 76%, 77%, 78%, 79%, 80%, 81%, 82%, 83%, 84%, 85%, 86%, 87%, 88%, 89%, and 90%.

In one embodiment of the present invention, the film has an IR rejection rate in the range from 60% to 99%, and the IR rejection rate of the film may be in a range defined by, for example but not limited to, any two of the following values: 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, and 99%. In one embodiment of the invention, the film has a UV rejection rate in the range from 45% to 95%, and the UV rejection rate of the film may be in a range defined by, for example but not limited to, any two of the following values: 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, and 95%.

In one embodiment of the present invention, the film has a solar heat gain coefficient (SHGC) in the range from 0.4 to 0.67, and the SHGC of the film may be in a range defined by, for example but not limited to, any two of the following values: 0.4, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, and 0.67. As used herein, the term "solar heat gain coefficient (SHGC)" is also known as total solar energy transmittance, solar factor, or the g-value and refers to the ratio of the solar radiation that has propagated through a glass door, window, or curtain wall and become indoor heat gain to the solar radiation incident on the glass door, window, or curtain wall, wherein the wavelength of the solar radiation is in the range from 300 to 2500 nm. More specifically, indoor heat gain caused by solar radiation includes: heat gain caused directly by the radiation or transmission of solar energy; and heat gain attributable to solar energy that is absorbed by a structure and then transferred indoors from the structure (secondary heat transfer). SHGC can be used to represent the heat gain ability of glass. The smaller the SHGC (e.g., smaller than or equal to 0.6), the better the thermal insulation property.

Yet another aspect of the present invention provides a multilayer structure that includes the foregoing film, wherein the multilayer structure is a wall material, a roofing material, or a window of a building or structure; a window of a vehicle; or other objects that are required to insulate heat and block out IR or UV radiation.

### Embodiments

The present invention will be described in more detail below with reference to a number of embodiments. It should be understood, however, that the following embodiments serve only to facilitate the understanding of, but not to limit, the invention.

### Resin selection and evaluation

Various water-soluble resins with different Tg values were selected. These water-soluble resins were used in specific concentrations in combination with thermal shielding particles in order to form different resin samples. The coating performance of each sample and the transparency, tactile feel, and removability of each resulting film were tested, and the test results are detailed in Table 1. More specifically, each sample was prepared by mixing one of the water-soluble resins (in each of three predetermined concentrations) with the thermal shielding particles (5 wt%) and water and filtering the resulting mixture, and the material of the thermal shielding particles was cesium tungsten oxide.

**Table 1**

| Resin | Tg (°C) | Water solubility | Concentration in the formula (wt%) | Spray coating test | Film transparency | Tactile feel | Removability |
|---|---|---|---|---|---|---|---|
| Silicone-acrylate copolymer emulsion | 45 | O | 20, 50, 80 | O | O | 2 | X |
| Silicone-modified acrylic resin | 30 | O | 20, 50, 80 | O | O | 2 | X |
| Fluorine-containing resin | 30-35 | O | 20, 50, 80 | O | O | 2 | X |
| Self-crosslinking acrylic resin | 58 | O | 20, 50, 80 | O | O | 2 | X |
| Self-crosslinking acrylic resin | 12-14 | O | 20, 50, 80 | O | Δ | 1 | O |
| Polyurethane resin | -20 | O | 20, 50, 80 | O | O | 1 | O |

The "coating performance" of a sample was tested by coating a piece of glass with the sample using an air pressure sprayer, evaluating the spraying operation, and performing a visual inspection of the quality of the resulting film. The test items included whether clogging occurred during the spraying operation, whether the exterior of the film was defective, and whether the film was noticeably uneven. If a sample and the resulting film had none of the foregoing defects, the corresponding test result was marked with "O"; if any of the foregoing defects was found, the corresponding test result was marked with "X."

"Film transparency" was determined by measuring the light transmission rate (T%) and haze with a haze tester (BYK-Gardner haze-gard plus 4725). A haze value less than 3% was marked with "O", and a haze value greater than or equal to 3% was marked with "X."

The "tactile feel" of a film was tested by touching the surface of the film with a finger and checking visually whether the film surface was tacky and whether a fingerprint was left on the surface. The more serious the aforesaid phenomena, the higher the score. In practice, the score is preferably lower than 2.

The "removability" of a film was tested when the film was dry, and the test was conducted by attaching a length of adhesive tape to a corner of the film and then peeling the film off with the adhesive tape. If a film was peeled off easily, the corresponding test result was marked with "O"; otherwise, the corresponding test result was marked with "X."

As can be seen in Table 1, only the self-crosslinking acrylic resin and polyurethane resin whose Tg values were in the range from -20°C to 25°C formed films with relatively high removability and relatively good tactile feel. By contrast, the films formed of the silicone-acrylate copolymer emulsion, of the silicone-modified acrylic resin, and of the fluorine-containing resin had undesirable tactile feel and low removability. It should be pointed out that the self-crosslinking acrylic resin whose Tg value was out of the aforesaid range also formed a film with poor tactile feel and low removability.

### Preparation of a liquid resin composition and the corresponding film

Given the foregoing test results, a cesium tungsten oxide (5 wt%) solution was mixed with a water-based solvent (15 wt%) and an additive (10 wt%), and the resulting mixture was stirred into a water-based polyurethane resin (70 wt%) to produce the liquid resin composition of this embodiment. The liquid resin composition was then used as a coating material for forming a liquid window film. More specifically, a piece of 3 mm-thick glass was brush-coated with the liquid resin composition, and the coating was allowed to dry at room temperature for two hours such that a transparent thermal insulation film was formed on the glass.

### Test on the ability to reduce temperature under sunlight irradiation

Referring to FIG. 2, continuous sunlight irradiation was simulated in order to test a film's ability to reduce temperature. FIG. 2 shows a device 100 for simulating continuous sunlight irradiation. Halogen lamps 110 were used to project light on a bare piece of glass 120 and a sample 130 (i.e., a piece of glass coated with the film of the present invention) simultaneously, and a thermocouple 140 was used to monitor the difference in temperature between the space covered by the bare piece of glass 120 and the space covered by the sample 130. The difference in temperature was calculated as follows: ΔT (°C) = temperature of the space covered by the sample (Tf) - temperature of the space covered by the bare piece of glass (T_{f}). The sample 130 was prepared in a way similar to that described above except that the formula included 25 wt% water-based solvent and 60 wt% water-based polyurethane resin, the other ingredients and their percentages being the same. Once the composition for making the sample 130 was prepared, a piece of glass was coated with the composition, and the coating was allowed to dry until a film was formed. The film on the glass had a thickness of about 20-25 µm.

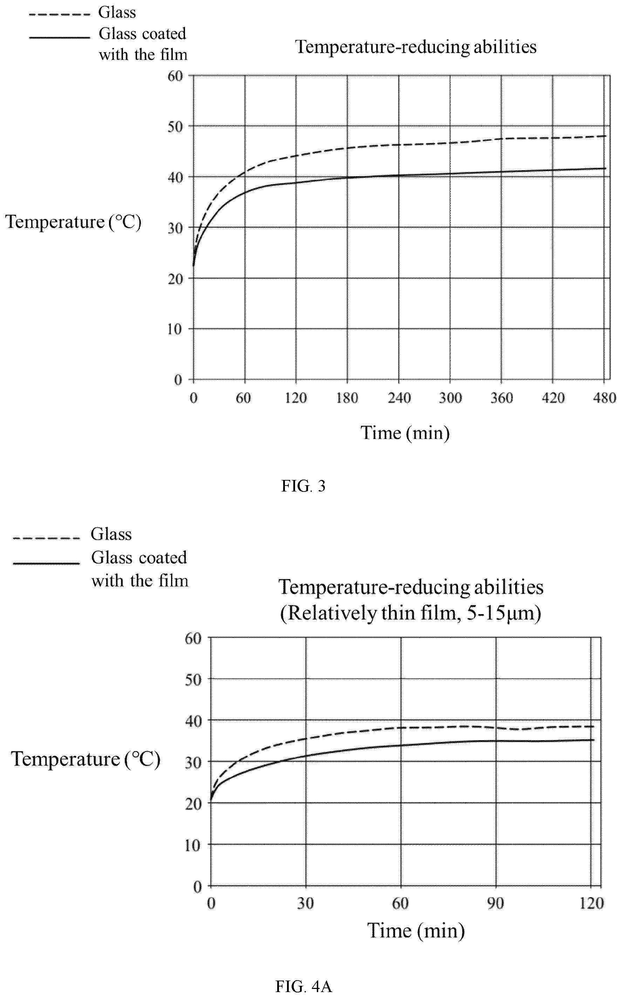

The experimental results are shown in FIG. 3. In the eight hours of continuous sunlight irradiation, the thermal insulation effect of the sample became stable four hours after the irradiation began, with ΔT being about -6.4°C. In other words, the film sample achieved constant thermal insulation about four hours after the test began. It can be inferred from the above that when exposed to sunlight continuously, the film of the present invention can provide a steady temperature-reducing effect, and thereby reduce the ingress of radiant heat, for at least eight hours.

### Test on the properties of films of different thicknesses

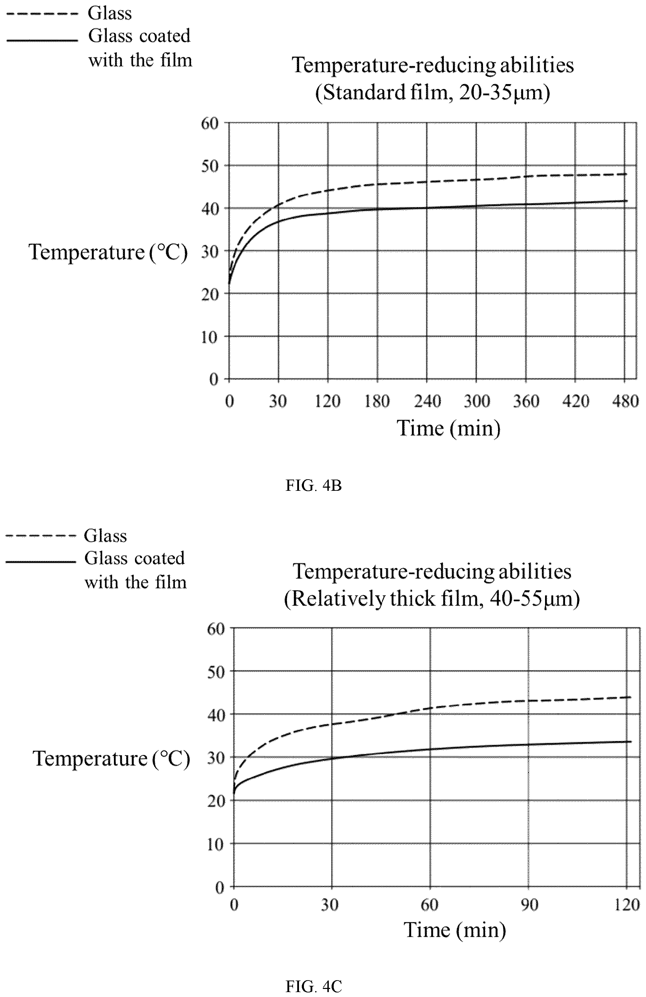

In this embodiment, samples each having a film thickness of 10, 20, 30.2, 31.6, or 40 µm were prepared by the foregoing method and were tested in terms of their temperature-reducing abilities (using the test method stated above), UV rejection rates, IR rejection rates, VLT rates, and SHGC. A bare piece of 3 mm-thick glass was used as the control group. The test results are shown in Tables 2 and 3 and FIG. 4A to FIG. 4C.

**Table 2**

| Item | Relatively thick | Standard | Standard | Standard | Relatively thin | Glass |
|---|---|---|---|---|---|---|
| Additive | A | B | B | A | A | - |
| Film thickness (µm) | 40 | 31.6 | 30.2 | 20 | 10 | - |
| Temperature-reducing ability (°C) | -9.6~-12.9 | -7.4 | -8.5 | -5.5~-6.3 | -2.4~-3.5 | 0 |
| UV rejection rate (%) | 74.3 | 92.2 | 93.4 | 73.9 | 46.0 | 10.1 |
| IR rejection rate (%) | 94.3 | 83.7 | 81.7 | 70.8 | 60.9 | 7.6 |
| VLT rate (%) | 71.3 | 79.2 | 79.3 | 82.0 | 85.1 | 91.0 |
| SHGC | 0.44 | 0.521 | 0.53 | 0.592 | 0.666 | 0.915 |

**Table 3**

| Thickness (µm) | Temperature-reducing ability (°C) |
|---|---|
| 5-15 | -3.5 |
| 20-35 | -6.3 |
| 40-55 | -9.6 |

The UV rejection rates, IR rejection rates, and VLT rates may be measured with a spectrophotometer (UV-Vis spectrophotometer Lambda 750 (PerkinElmer, USA)) or LS 182 Spectrum Transmission Meter. More specifically, the VLT rates were calculated based on a wavelength range from 380 to 780 nm, the IR transmission rates were calculated based on a wavelength range from 780 to 2500 nm or a fixed wavelength of 940 or 1400 nm, and the UV transmission rates were calculated based on a fixed wavelength of 365 nm. The IR rejection rates, each defined as the percentage of the infrared radiation that fails to pass through a transparent insulation film structure, were calculated as: IR rejection rate = (100% - IR transmission rate), and the UV rejection rates, each defined as the percentage of the UV radiation that fails to pass through a transparent insulation film structure, were calculated as: UV rejection rate = (100% - UV transmission rate).

SHGC is the value of a ratio, or more particularly the ratio of the solar radiant heat that has passed through a film. Here, SHGC was a parameter obtained through LS 182 Spectrum Transmission Meter (which is a solar film testing instrument). SHGC was rated according to a door and window rating standard commonly used in North America, i.e., the rating and labeling system established by the National Fenestration Rating Council (NFRC). Generally, the SHGC value is between 0.25 and 0.8. The SHGC value of a preferred embodiment of the present invention is between 0.4 and 0.67.

It can be known from the foregoing results that regardless of their thicknesses, the films formed of the liquid resin composition of the present invention had good temperature-reducing abilities and good UV rejection, IR rejection, VLT, and SHGC performances. When the film thickness was relatively great, the VLT rate was still higher than 70%, and the IR and UV rejection effects were excellent, which led to an outstanding temperature-reducing effect. In addition, the films of standard thicknesses were transparent and slightly blue, and all the films whose thicknesses were standard or relatively great had UV rejection rates higher than 70%. Even when the film thickness was relatively small, the UV rejection rate was still higher than 45%.

According to the above, a film formed of the liquid resin composition of the present invention can block out IR and UV radiation while remaining highly permeable to visible light, meaning the film can ward off the radiant heat and UV radiation of sunlight but is still visually transparent. Thus, the invention contributes to lowering the temperature of an indoor environment naturally, saving energy, reducing carbon emissions, extending the service lives of objects, and providing surface protection. Besides, the film of the invention is easy to apply and peel off, does not leave adhesive residue on the surface of the object coated with the film, and can clean the surface of the object incidentally by being peeled off the surface.

All the ranges provided herein are intended to include each specific range within the given range and the combination of subranges within the given range. In addition, unless otherwise specified, all ranges provided herein include the endpoints of the range. Thus, the range of 1 to 5 specifically includes 1, 2, 3, 4 and 5, and subranges such as 2 to 5, 3 to 5, 2 to 3, 2 to 4, and 1 to 4.

A detailed description of the present invention has been given above, and yet the foregoing description is based on only some preferred embodiments of the invention and is not intended to limit the scope of the invention. Any equivalent change or modification that is made according to the appended claims shall fall within the scope of the invention.

## Claims

1. A liquid resin composition, comprising: (a) a resin making up 20-80 wt% of the liquid resin composition, wherein the resin is selected from the group consisting of a self-crosslinking acrylic resin and a polyurethane resin, and the resin has a glass transition temperature (Tg) in a range from -20°C to 25°C; (b) thermal shielding particles making up 1-10 wt% of the liquid resin composition; and (c) a water-based solvent making up 5-25 wt% of the liquid resin composition.

2. The liquid resin composition of claim 1, wherein the thermal shielding particles are cesium tungsten oxide.

3. The liquid resin composition of claim 1, wherein the water-based solvent is selected from the group consisting of water, a short-chain ester, an ether, and an alcohol.

4. The liquid resin composition of any of claims 1 to 3, further comprising an additive, wherein the additive is selected from the group consisting of an ultraviolet (UV) absorber, a UV stabilizer, a thickener, a leveling agent, a rheology modifier, and an anti-foaming agent.

5. The liquid resin composition of claim 4, wherein the additive is the UV absorber or the UV stabilizer and makes up 1-3 wt% of the liquid resin composition.

6. The liquid resin composition of claim 4, wherein the additive is the leveling agent and makes up 0.01-7 wt% of the liquid resin composition.

7. The liquid resin composition of claim 4, wherein the additive is the rheology modifier and makes up 0.1-5 wt% of the liquid resin composition.

8. The liquid resin composition of claim 4, wherein the additive is the anti-foaming agent and makes up 0.05-3 wt% of the liquid resin composition.

9. A film able to be peeled off a substrate, wherein the film is formed by coating the substrate with the liquid resin composition of any of claims 1 to 8 and drying the liquid resin composition on the substrate.

10. The film of claim 9, wherein the substrate is glass, a polycarbonate, or an acrylic resin.

11. The film of claim 9, wherein the film has a thickness in a range from 10 to 50 µm.

12. The film of any of claims 9 to 11, wherein the film has a visible light transmission (VLT) rate in a range from 70% to 90%.

13. The film of claim 12, wherein the film has an infrared (IR) rejection rate in a range from 60% to 99%.

14. The film of claim 13, wherein the film has an ultraviolet (UV) rejection rate in a range from 45% to 95% and/or the film has a solar heat gain coefficient (SHGC) in a range from 0.4 to 0.67.

15. A multilayer structure, comprising the film of any of claims 9 to 14, wherein the multilayer structure is a wall material, a roofing material, or a window of a building or structure or a window of a vehicle.

## Amended claims

### Amended claims in accordance with Rule 137(2) EPC.

1. A liquid resin composition, comprising: (a) a resin making up 45-80 wt% of the liquid resin composition, wherein the resin is selected from the group consisting of a self-crosslinking acrylic resin and a polyurethane resin, and the resin has a glass transition temperature (Tg) in a range from -20°C to 25°C; (b) thermal shielding particles making up 1-10 wt% of the liquid resin composition; and (c) a water-based solvent making up 5-25 wt% of the liquid resin composition.

2. The liquid resin composition of claim 1, wherein the thermal shielding particles are cesium tungsten oxide.

3. The liquid resin composition of claim 1, wherein the water-based solvent is selected from the group consisting of water, a short-chain ester, an ether, and an alcohol.

4. The liquid resin composition of any of claims 1 to 3, further comprising an additive, wherein the additive is selected from the group consisting of an ultraviolet (UV) absorber, a UV stabilizer, a thickener, a leveling agent, a rheology modifier, and an anti-foaming agent.

5. The liquid resin composition of claim 4, wherein the additive is the UV absorber or the UV stabilizer and makes up 1-3 wt% of the liquid resin composition.

6. The liquid resin composition of claim 4, wherein the additive is the leveling agent and makes up 0.01-7 wt% of the liquid resin composition.

7. The liquid resin composition of claim 4, wherein the additive is the rheology modifier and makes up 0.1-5 wt% of the liquid resin composition.

8. The liquid resin composition of claim 4, wherein the additive is the anti-foaming agent and makes up 0.05-3 wt% of the liquid resin composition.

9. A film, wherein the film is formed by coating the substrate with the liquid resin composition of any of claims 1 to 8 and drying the liquid resin composition on the substrate, wherein the film is able to be peeled off a substrate.

10. The film of claim 9, wherein the substrate is glass, a polycarbonate, or an acrylic resin.

11. The film of claim 9, wherein the film has a thickness in a range from 10 to 50 µm.

12. The film of any of claims 9 to 11, wherein the film has a visible light transmission (VLT) rate in a range from 70% to 90%; wherein the VLT rate is measured according to the description.

13. The film of claim 12, wherein the film has an infrared (IR) rejection rate in a range from 60% to 99%; wherein the IR rejection rate is measured according to the description.

14. The film of claim 13, wherein the film has an ultraviolet (UV) rejection rate in a range from 45% to 95% and/or the film has a solar heat gain coefficient (SHGC) in a range from 0.4 to 0.67; wherein the UV rejection rate and SHGC are measured according to the description.

15. A multilayer structure, comprising the film of any of claims 9 to 14, wherein the multilayer structure is a wall material, a roofing material, or a window of a building or structure or a window of a vehicle.
